# EUROPÄISCHE PATENTSCHRIFT

(11) **EP 3 288 741 B1**
(45) Veröffentlichungstag und Bekanntmachung des Hinweises auf die Patenterteilung: **28.04.2021**
(21) Anmeldenummer: 16724618.0
(22) Anmeldetag: 18.05.2016
(51) Int. Cl.: B29C 48/07, B29C 48/51, B29C 48/305

(54) **REIFENSTREIFEN-EXTRUSIONSVORRICHTUNG ZUM HERSTELLEN VON LAUF- UND/ODER SEITENSTREIFEN FÜR REIFEN UND VERFAHREN ZUM HERSTELLEN EINES LAUF- ODER SEITENSTREIFENS EINES REIFENS**
TIRE STRIP EXTRUSION APPARATUS FOR MANUFACTURING TREADS OR SIDE WALLS FOR TIRES AND MANUFACTURING METHOD TREADS OR SIDE WALLS FOR TIRES
APPAREIL D'EXTRUSION DE BANDES DE PNEU POUR FABRICATION DE BANDES DE ROULEMENT OU FLANCS ET PROCÉDÉ DE FABRICATION DE BANDES DE ROULEMENT OU FLANCS

(30) Priorität: 02.06.2015 DE 102015108707
(43) Veröffentlichungstag der Anmeldung: 07.03.2018
(73) Patentinhaber: KraussMaffei Extrusion GmbH, 30625 Hannover (DE)
(72) Erfinder: REINEKE, Frank, 30952 Ronnenberg (DE)
(74) Vertreter: Krauss, Philipp
(86) Internationale Anmeldenummer: PCT/EP2016/061070
(87) Internationale Veröffentlichungsnummer: WO 2016/192988

(56) Entgegenhaltungen:
- EP-A2- 1 604 802
- WO-A2-2015/032381
- DE-C1- 3 638 623
- DE-C1- 3 709 248
- JP-A- H06 210 702
- JP-A- H06 210 702
- Anonymous: "Tyre technology for effective production Multiplex Extrusion Lines Engineering Value", , 27. September 2013 (2013-09-27), Seiten 1-16, XP055296119, Gefunden im Internet: URL:http://www.kraussmaffeiberstorff.com/e n/download/do/download.html?uid=c6ecfeb8-b 40c-9eaf-51f0-43c27bd3d9c9&a=1 [gefunden am 2016-08-17]

## Beschreibung

Die Erfindung betrifft eine Reifenstreifen-Extrusionsvorrichtung zum Herstellen von Lauf- und/oder Seitenstreifen für Reifen mit (a) einem ersten Extruder, der zumindest eine erste Schnecke mit einer ersten Schnecken-Längsachse aufweist, (b) einem zweiten Extruder, der zumindest eine zweite Schnecke mit einer zweiten Schnecken-Längsachse aufweist, (c) einem dritten Extruder, der zumindest eine dritte Schnecke mit einer dritten Schnecken-Längsachse aufweist, (d) zumindest einem vierten Extruder, der zumindest eine vierte Schnecke mit einer vierten Schnecken-Längsachse aufweist, und (e) einem Extrusionskopf mit (i) einem Kopfgehäuse, das zumindest vier Zuführöffnungen aufweist, die mit jeweils einem zugeordneten Extruder zum Zuführen von Extrusionsmaterial verbunden sind, und (ii) einem Spritzwerkzeug zum Formen eines Extrusionsstrangs aus den Extrusionsmaterialien, das mit dem Kopfgehäuse verbunden ist, eine Austrittsöffnung besitzt und so angeordnet ist, dass durch die Zuführöffnungen zugeführtes Extrusionsmaterial entlang eines jeweiligen Materialpfads zur Austrittsöffnung leitbar ist, wobei zumindest die Mehrheit der Extruder um das Kopfgehäuse so ausgebildet sind, dass die Schnecken der jeweiligen Extruder mittels einer Bewegung der Schnecke durch das Kopfgehäuse entnehmbar sind, während das Kopfgehäuse relativ zu den Extrudern ruht, und wobei das Spritzwerkzeug eine Profilplatte aufweist, an der die Austrittsöffnung ausgebildet ist.

Gemäß einem zweiten Aspekt betrifft die Erfindung ein Verfahren zum Herstellen eines Lauf- oder Seitenstreifens eines Reifens. Zusätzlich betrifft die Erfindung ein Verfahren zum Herstellen eines Reifens, bei dem ein derartig hergestellter Lauf- oder Seitenstreifen verwendet wird.

Eine derartige Reifenstreifen-Extrusionsvorrichtung wird verwendet, um Lauf- oder Seitenstreifen für Reifen herzustellen. Derartige Reifenstreifen-Extrusionsvorrichtungen sind gegenüber sonstigen Extrusionsvorrichtungen zum Extrudieren von Kautschuk zu einem massiven Streifen mit einem hohen Durchsatz ausgebildet. So sind Reifenstreifen-Extrusionsvorrichtungen oft so ausgebildet, dass sie zumindest 1500 kg Reifenstreifen pro Stunde herstellen können. Das führt zu einem sehr hohen Durchsatz an Kautschuk durch das Spritzwerkzeug.

Um den großen Durchsatz zu erzielen, werden große Extruder verwendet, das heißt, dass die verwendeten Extruder einen relativ großen Schneckendurchmesser besitzen. Kleinere Schneckendurchmesser sind nachteilig, da große Durchsätze mit kleinen Extrudern nur dann erreicht werden können, wenn diese mit einer hohen Drehzahl betrieben werden. Das aber erhöht die Scherbelastung des Kautschuks und erhöht die Gefahr eines vorzeitigen Vulkanisierens, was vermieden werden muss.

Große Extruder besitzen einen im Vergleich zu kleinen Extrudern geringen Wirkungsgrad bei hohem Spritzdruck. Es wird daher versucht, den Strömungswiderstand im Extrusionskopf möglichst klein zu halten.

JP H06 210702 A offenbart eine Vorrichtung zur Herstellung von Gummistreifen für ein einfaches Anbringen und Abnehmen und Erleichtern der Produktion durch Bereitstellen eines Zwischenspaltelements mit einem einheitlichen Durchgang zwischen einem Spaltelement auf der Rückseite mit mehreren Zuflusslöchern für verschiedene Materialien und einem Spaltelement auf der Vorderseite mit einem Abflussloch, das das Fließen der Materialien ermöglicht. Vorgesehen ist hierfür ein geteiltes Element auf der Rückseite mit vier Einströmlöchern, die das Einfließen verschiedener Materialien ermöglichen, ein geteiltes Element auf der Vorderseite mit einem Ausströmloch, das das Ausströmen der Materialien in einem einheitlichen Zustand als Zwischenprodukt ermöglicht sowie ein geteiltes Element mit einem Durchgang, der die von den Einströmlöchern eintretenden Materialien vereinheitlicht. Das vordere Flächenteilungselement ermöglicht es den drei Arten von Materialien aus den Einströmlöchern sich mit dem Material aus dem verbleibenden Einströmloch zu treffen.

EP 1 604 802 B1 offenbart eine Vorrichtung zum Herstellen eines Streifens aus Kautschukmischungen, umfassend vier Extruder von Kautschukmischungen und einen einzigen Extruderkopf, der eine Extrudierdüse aufweist, wobei der Extruderkopf eine Extruderwerkzeuganordnung und einen Hauptkörper umfasst. Der Hauptkörper ist mit einer Ausnehmung versehen, in der die Extruderwerkzeuganordnung montiert ist, dass der Hauptkörper aus einem Paar lateral beabstandeten lateralen Blöcken, die jeweils eine obere innere Fläche und eine untere innere Fläche aufweisen, wobei die lateralen Blöcke unbeweglich abgestützt sind, und einem zentralen Block, der zwischen den entgegengesetzten oberen inneren Flächen der lateralen Blöcke angeordnet ist, und einem Paar lateral beabstandeten Teilblöcken zusammengesetzt ist, die unterhalb der lateralen Blöcke angeordnet sind und eine obere Fläche aufweisen, die die untere innere Fläche berührt, dass der zentrale Block eine Unterseitenfläche und ein Paar Seitenflächen mit V-Form aufweist, die sich in einer V-förmigen Ausgestaltung nach unten bis zu lateralen Enden der Unterseitenfläche erstrecken. Die entgegengesetzten oberen inneren Flächen der lateralen Blöcke erstrecken sich in der gleichen V-förmigen Ausgestaltung wie die Seitenflächen mit V-Form, um in die Seitenflächen mit V-Form des zentralen Blocks zu passen. Die lateralen Blöcke sind jeweils mit einer Stirnendoberfläche versehen, die sich zwischen der oberen inneren Fläche und der unteren inneren Fläche erstreckt. Die Teilblöcke sind jeweils mit einer inneren Seitenfläche versehen, die sich von der oberen Fläche erstreckt. Die Ausnehmung als ist eine Ausnehmung mit offenem Boden durch die Stirnendoberflächen, die inneren Seitenflächen und der Unterseitenfläche gebildet. Ein oberer Vorformungskanal ist vorgesehen, der sich von jeder der oberen Befestigungsflächen bis zu der Ausnehmung erstreckt und eine Trennebene zwischen der Seitenfläche mit V-Form und der oberen inneren Fläche aufweist. Ein unterer Vorformungskanal ist vorgesehen, der sich von jeder der unteren Befestigungsflächen bis zu der Ausnehmung erstreckt und eine Trennebene zwischen der unteren inneren Fläche und der oberen Fläche aufweist. Der zentrale Block ist beweglich in Relation zu den lateralen Blöcken abgestützt, um die oberen Vorformungskanäle durch die Trennebene zwischen der Seitenfläche mit V-Form und der oberen inneren Fläche zu öffnen. Die Teilblöcke sind in Relation zu den lateralen Blöcken beweglich abgestützt, um die unteren Vorformungskanäle durch die Trennebene zwischen der unteren inneren Fläche und der oberen Fläche zu öffnen.

Nachteilig an bekannten Reifenstreifen-Extrusionsvorrichtungen ist, dass sie vergleichsweise aufwändig und schlecht zu reinigen sind.

Nachteilig ist zudem, dass komplexe Reifenstreifen nicht gefertigt werden können. Der Erfindung liegt die Aufgabe zugrunde, Nachteile im Stand der Technik zu vermindern.

Die Erfindung löst das Problem durch eine Reifenstreifen-Extrusionsvorrichtung nach Anspruch 1. Gemäß einem zweiten Aspekt löst die Erfindung das Problem durch ein Verfahren nach Anspruch 10, bei dem eine erfindungsgemäße Reifenstreifen-Extrusionsvorrichtung eingesetzt wird.

Vorteilhaft an der Erfindung ist, dass der Extrusionskopf sehr leicht zu reinigen ist. So ist es lediglich notwendig, die Verteilerplatten zu entnehmen und zu reinigen. Anders als bei bekannten Extrusionsvorrichtungen, die klappbare Werkzeugeinsätze aufweisen, ist das schnell und einfach bei geringem baulichem Aufwand möglich.

Ein weiterer Vorteil der Erfindung ist, dass komplex gestaltete Reifenstreifen extrudiert werden können. Bei bekannten Reifenstreifen-Extrusionsvorrichtungen besitzt der Extrusionskopf schwenkbare Werkzeugeinsätze. Derartige schwenkbare Werkzeugeinsätze können aber nur schlecht so gebaut werden, dass mehr als 6, 7 oder gar 8 Arten von Extrusionsmaterial zugeführt und zum Reifenstreifen geformt werden können. Durch das Vorhandensein der Verteilerplatten können viele unterschiedliche Materialpfade für Extrusionsmaterial gebildet werden.

Es wäre zu erwarten gewesen, dass durch das Vorsehen der Verteilerplatten ein so hoher Spritzdruck notwendig wird, dass der einhergehende Wirkungsgradverlust und die daraus resultierende zusätzliche innere Reibung des Kautschuks zum vorzeitigen Ausvulkanisieren führen. Es hat sich jedoch herausgestellt, dass es durch die Verwendung mehrerer kleinerer Extruder möglich ist, die für die Herstellung von Reifenstreifen notwendigen Durchsätze zu erreichen, ohne dass es zu einem vorzeitigen Ausvulkanisieren kommt.

Im Rahmen der vorliegenden Beschreibung wird unter einer Reifenstreifen-Extrusionsvorrichtung eine Vorrichtung verstanden, die im Betrieb Reifenstreifen produziert. Unter einem Reifenstreifen wird ein Lauf- oder Seitenstreifen eines Reifens verstanden.

Unter dem Kopfgehäuse wird insbesondere derjenige Teil des Extrusionskopfs verstanden, der fest mit den Extrudern verbunden ist. Zwar ist es möglich und gemäß einer bevorzugten Ausführungsform vorgesehen, dass das Kopfgehäuse lösbar mit dem Extruder verbunden ist, die Verbindung ist aber in der Regel so ausgebildet, dass sie zum Wechseln des Spritzwerkzeugs nicht gelöst werden muss.

Günstig ist es, wenn der Extrusionskopf so ausgebaut ist, dass ein massiver Reifenstreifen gebildet wird. Ein massiver Reifenstreifen enthält keine Kammern.

Unter einer Profilplatte wird insbesondere ein Bauteil verstanden, das bezüglich einer Raumrichtung, nämlich der Höhe, deutlich kleiner ist als bezüglich der beiden weiteren Raumrichtungen, nämlich bezüglich Länge und Breite. Es ist möglich und stellt eine bevorzugte Ausführungsform dar, dass zumindest die Mehrheit der Verteilerplatten, insbesondere alle Verteilerplatten, eine quaderförmige Grundgestalt haben.

Es sei angemerkt, dass alle Extrusionsmaterialien den Extrusionskopf durch die Profilplatte verlassen. Die Austrittsöffnung der Profilplatte wirkt endformgebend.

Es ist günstig, wenn sich die Extrusionsmaterialien der einzelnen Extruder untereinander in zumindest einer Eigenschaft, beispielsweise ihrer Zusammensetzung, unterscheiden. Der Reifenstreifen kann dann auch als Mehrkomponenten-Streifen bezeichnet werden.

Um hinreichend komplexe Reifenstreifen fertigen zu können, ist es günstig, wenn das Spritzwerkzeug zumindest drei Verteilerplatten aufweist. Um den Strömungswiderstand, den die Verteilerplatten dem Extrusionsmaterial entgegensetzen, klein zu halten, ist es günstig, wenn das Spritzwerkzeug höchstens sechs Verteilerplatten aufweist. Um eine besonders große Stabilität zu erreichen, ist das Kopfgehäuse vorzugsweise einteilig ausgebildet, das heißt, dass keine lösbar verbundenen Teile vorhanden sind. Insbesondere ist das Kopfgehäuse einstückig, das heißt, dass keine Fügestellen existieren.

Die Verteilerplatten sind vorzugsweise hintereinander angeordnet, das heißt, dass das Extrusionsmaterial die Platten sukzessive durchströmt. Vorzugsweise verläuft der Materialpfad für kein Extrusionsmaterial rückwärts, das heißt, dass der Materialpfad eine Platte zunächst in eine Richtung und dann in die entgegen gesetzte Richtung quert.

Die Mehrheit der Extruder und das Kopfgehäuse sind so ausgebildet, dass die Schnecken der jeweiligen Extruder (a) mittels einer Bewegung der Schnecke durch das Kopfgehäuse oder (b) mittels einer Bewegung der Schnecke vom Kopfgehäuse weg entnehmbar sind, während das Kopfgehäuse relativ zu den Extrudern ruht. Da große Durchsätze bei der Fertigung von Reifenstreifen erforderlich sind, sind die dazu verwendeten Extruder ebenfalls auf einen hohen Durchsatz ausgelegt und dementsprechend klobig. Zudem müssen auf die Wellen der Extruder große Antriebsleistungen übertragen werden, weshalb es sich bei Reifenstreifen-Extrusionsvorrichtungen durchgesetzt hat, dass die Schnecken der Extruder entnommen werden können, ohne das Kopfgehäuse relativ zu den Extrudern bewegen zu müssen.

Gemäß einer bevorzugten Ausführungsform besitzt die Reifenstreifen-Extrusionsvorrichtung zumindest sieben Extruder. Eine derartige Anzahl an Extrudern kann mit bisherigen Extrusionsköpfen nicht aufgebaut werden, da die Vielzahl von Kanälen für die Extrusionsmaterialien eine Vielzahl an klappbaren Werkzeugeinsätzen erfordert, wobei diese Werkzeugeinsätze jeweils zueinander genauer ausgerichtete Schwenkachsen besitzen müssen.

Besonders günstig ist es, wenn das Kopfgehäuse zumindest sieben Zuführöffnungen besitzt und jeder Extruder mit genau einer Zuführöffnung verbunden ist.

Um einen möglichst hohen Durchsatz, insbesondere einen Durchsatz von mehr als 1500 kg pro Stunde, zu erreichen, ist es günstig, wenn alle Extruder einen Extruderschneckendurchmesser von zumindest 90 Millimeter besitzen. Der Extruderschneckendurchmesser ist der Durchmesser der Extrudierschnecke oder der Extrudierschnecken. Gemäß einer bevorzugten Ausführungsform weist zumindest eine Verteilerplatte zumindest einen Leitkanal auf, der sich zumindest abschnittsweise entlang einer Trennfläche erstreckt.

Unter dem Merkmal, dass sich der Leitkanal entlang der Trennfläche erstreckt, wird insbesondere verstanden, dass der Leitkanal zu einer Stirnseite, das heißt der Trennfläche, offen ist und/oder im Inneren der Platte entlang der Trennfläche verläuft, sodass das Extrusionsmaterial im Betrieb entlang der Trennfläche fließt. Ist der Leitkanal zu einer Stirnseite auf seiner Platte offen, so hat das durch diesen Leitkanal fließende Extrusionsmaterial gleichzeitig Kontakt zu der entsprechenden Verteilerplatte und entweder einer benachbarten Verteilerplatte oder dem Kopfgehäuse.

Besonders günstig ist es, wenn alle Materialpfade durch alle Trennflächen verlaufen. In anderen Worten verläuft dann kein Materialpfad zwischen einer Schmalseite einer Verteilerplatte und dem Kopfgehäuse. Das wiederum bedeutet, dass durch Entnehmen des Spritzwerkzeugs in aller Regel nur noch an den Stellen Kautschukmaterial vorhanden ist, an denen das vom Extruder kommende Extrusionsmaterial in das Spritzwerkzeug eintritt. Die Seitenflächen des Kopfgehäuses, an denen das Spritzwerkzeug anliegt, kommen hingegen nicht in Kontakt mit dem Kautschukmaterial, so dass sie auch nicht gereinigt werden müssen.

Zumindest eine Verteilerplatte weist eine Bohrung auf und der Leitkanal ist mit der Bohrung verbunden. Das Extrusionsmaterial kann dann durch die Bohrung strömen und entlang des Leitkanals beispielsweise zu einer, zwei oder mehr Bohrungen einer in Materialflussrichtung hinter dieser Verteilerplatte angeordneten Verteilerplatte fließen. Besonders günstig es, wenn zumindest zwei Verteilerplatten zumindest jeweils einen Leitkanal aufweisen. Insbesondere ist es günstig und gemäß einer bevorzugten Ausführungsform vorgesehen, dass zumindest eine Verteilerplatte zumindest zwei Leitkanäle aufweist. Es sei darauf hingewiesen, dass zwei oder mehr Verteilerplatten eine oder mehr Bohrungen aufweist.

Zumindest ein Leitkanal besitzt an einem der Bohrung abgewandten Ende eine Verzweigung in einen ersten Kanal-Zweig und zumindest einen zweiten Kanal-Zweig, so dass aus der Bohrung im Leitkanal fließendes Extrusionsmaterial in Strömungsrichtung hinter der Verzweigung sowohl in den ersten Kanal-Zweig als auch in den zweiten Kanal-Zweig fließt. Günstig ist es, wenn zumindest ein Leitkanal drei Kanal-Zweige besitzt. Es ist dann möglich, Reifenstreifen mit komplexen Querschnitten zu fertigen, wobei die Zahl der einzelnen Segmente im Querschnitt des Reifenstreifens größer ist als die Zahl der zur Herstellung des Reifenstreifens notwendigen Extruder. So kann beispielsweise von einem Extruder stammendes Extrusionsmaterial an zwei voneinander beabstandeten und voneinander getrennten Bereichen des Querschnitts des Reifenstreifens extrudiert werden.

Günstig ist, wenn die Austrittsöffnung eine Querschnittsfläche von zumindest 1000 Quadratmillimeter, insbesondere zumindest 1500 Quadratmillimeter hat. So große Querschnitte erfordern, wie oben bereits ausgeführt, besonders leistungsfähige Extruder, so dass es zu den geschilderten Problemen kommt, die durch die Erfindung überwunden werden.

Günstig ist es, wenn die Verteilerplatten durch eine Translationsbewegung in das Kopfgehäuse einsetzbar ausgebildet sind. In anderen Worten ist eine Schwenkbewegung entbehrlich. Das Spritzwerkzeug kann so besonders einfach entnommen und wieder eingesetzt werden.

Günstig ist es, wenn eine Mehrheit der Extruder einen Schneckendurchmesser von höchstens 150 Millimeter, insbesondere höchstens 120 Millimeter hat. Kleine Schneckendurchmesser führen bei einem hohen Gegendruck zu einem höheren Wirkungsgrad als großen Schneckendurchmesser. Obwohl also ein hoher Durchsatz gefordert ist, ist es bei der Verwendung der Verteilerplatten vorteilhaft, Extruder mit vergleichsweise kleinen Schneckendurchmessern zu verwenden.

Günstig ist es, wenn eine Abweichung zwischen dem maximalen Schneckendurchmesser aller Extruder und dem Mittelwert aller Schneckendurchmesser höchstens 30 Millimeter beträgt. So kann ein Streifen mit ähnlichen Anteilen der einzelnen Extrusionsmaterialien am Querschnitt des Reifenstreifens energieeffizient hergestellt werden. Die vergleichsweise geringe Abweichung der Schneckendurchmesser der Extruder untereinander führt dazu, dass die Extruder vergleichsweise einfach am gleichen Arbeitspunkt betrieben werden können, was zu einer energieeffizienten Fahrweise der Reifenstreifen-Extrusionsvorrichtung führt. Günstig ist es zudem, wenn die Abweichung zwischen dem minimalen Schneckendurchmesser aller Extruder und dem Mittelwert aller Schneckendurchmesser höchstens 30 Millimeter beträgt.

Günstig ist es, wenn zumindest die Mehrheit aller Extruder den gleichen Schneckendurchmesser hat. Selbstverständlich ist es nicht notwendig, dass die Schneckendurchmesser im mathematischen Sinne gleich sind. Es ist vielmehr ausreichend, dass die Schneckendurchmesser sich so wenig voneinander unterscheiden, dass sie als gleich betrachtet werden können. Insbesondere sind Abweichungen von drei Prozent tolerabel. Bezogen auf einen Schneckendurchmesser von 90 Millimeter bedeutet dies, dass sich der kleinste Schneckendurchmesser vom größten Schneckendurchmesser um cirka fünf Millimeter unterscheiden kann. Vorteilhaft an gleichen Schneckendurchmessern ist, dass die Reifenstreifen-Extrusionsvorrichtung leicht zu regeln und energieeffizient betreibbar ist.

Günstig ist es, wenn zumindest die Mehrheit der Verteilerplatten eine Zentrierhilfe-Vorrichtung zum formschlüssigen Ausrichten benachbarter Verteilerplatten aufweist. Es kann sich beispielsweise um Vorsprünge und/oder Ausnehmungen handeln.

Bevorzugt umfasst die Reifenstreifen-Extrusionsvorrichtung eine Fixiervorrichtung zum Fixieren der Verteilerplatten am Kopfgehäuse. Es kann sich dabei um eine mechanische und/oder hydraulische Fixiervorrichtung handeln.

Beim Fertigen von Reifenstreifen mit einer Vielzahl von Extrudern ist es notwendig, diese möglichst effizient um den Extrusionskopf herum anzuordnen. Es hat sich herausgestellt, dass es vorteilhaft ist, die Extruder so anzuordnen, dass die Projektionen von zumindest zwei Schnecken-Längsachsen auf die horizontale Ebene in einen Winkel von zumindest 45° einfließen. In anderen Worten: sind die Extruder vorzugsweise fächerförmig um den Extrusionskopf angeordnet, so wird der Weg kurz gehalten, den das Extrusionsmaterial nach Verlassen der Schnecke zurückzulegen hat, was die für den Extruder notwendige Antriebsleistung verringert.

Vorteilhaft ist es, wenn das Kopfgehäuse eine konvex gewölbte Rückwand besitzt, die den Extrudern zugewandt ist. Es ist dann möglich, dass die Zuführung zwischen den Extrudern und dem Extrusionskopf unter einem Winkel angebracht werden, der nur wenig von 90° abweicht. So wird die Montage vereinfacht.

Günstig ist es, wenn die Zuführöffnungen in einem zweidimensionalen Muster angeordnet sind. Unter dem Merkmal, dass die Zuführöffnungen in einem zweidimensionalen Muster angeordnet sind, wird insbesondere verstanden, dass für ein Hüllrechteck, also ein Rechteck minimaler Fläche, das alle Zuführöffnungen umgibt, gilt, dass alle Seitenlängen größer sind als das 1,3-fache, insbesondere das Doppelte, besonders bevorzugt des mittleren Schneckendurchmessers. Vorzugsweise sind die Zuführöffnungen entlang zueinander versetzter Linien angeordnet. Sind die Zuführöffnungen auf einer gekrümmten Fläche angeordnet, so ist das Hüllrechteck ein Rechteck auf dieser gekrümmten Fläche.

Gemäß einer bevorzugten Ausführungsform umfasst die Reifenstreifen-Extrusionsvorrichtung eine Verteilerplatten-Temperiervorrichtung zum Bringen zumindest einer Verteilerplatte auf eine vorgegebene Temperatur.

Bei einem erfindungsgemäßen Verfahren beträgt der Ausstoß an Laufstreifen vorzugsweise zumindest 2500 Kilogramm pro Stunde. Alternativ beträgt ein Ausstoß an Seitenstreifen zumindest 1000 Kilogramm pro Stunde. Statt vom Ausstoß könnte auch vom Durchsatz gesprochen werden.

Im Folgenden wird die Erfindung anhand der beigefügten Zeichnungen näher erläutert. Dabei zeigt
- Figur 1: eine dreidimensionale schematische Teil-Ansicht einer erfindungsgemäßen Reifenstreifen-Extrusionsvorrichtung,
- Figur 2: die Reifenstreifen-Extrusionsvorrichtung gemäß Figur 1, bei der das Spritzwerkzeug aus dem Extrusionskopf entfernt wurde,
- Figur 3: das Spritzwerkzeug der Reifenstreifen-Extrusionsvorrichtung der Figuren 1 und 2,
- Figur 4: das Spritzwerkzeug gemäß Figur 3 mit entfernter Profilplatte,
- Figur 5: zwei Verteilerplatten des Spritzwerkzeugs gemäß den Figuren 3 und 4, wobei die bezüglich der Materialflussrichtung letzte Verteilerplatte entfernt wurde, und
- Figur 6: die bezüglich einer Materialflussrichtung vorderste Verteilerplatte des Spritzwerkzeugs.

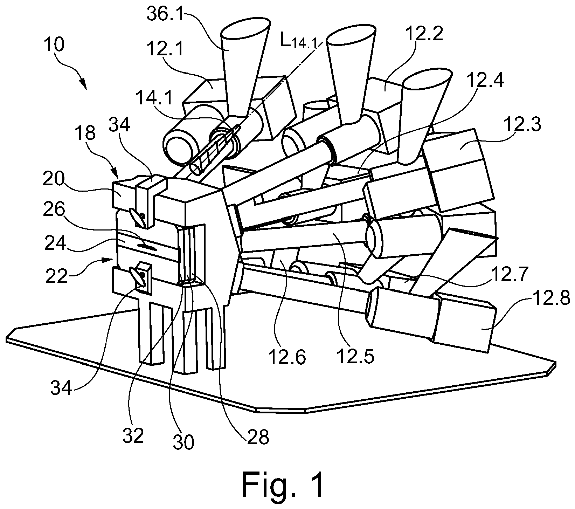

Figur 1 zeigt eine erfindungsgemäße Reifenstreifen-Extrusionsvorrichtung 10, die einen ersten Extruder 12.1, einen zweiten Extruder 12.2, einen dritten Extruder 12.3, einen vierten Extruder 12.4, einen fünften Extruder 12.5, einen sechsten Extruder 12.6, einen siebten Extruder 12.7 und einen achten Extruder 12.8 aufweist. Jeder Extruder 12.i (i = 1, 2, ..., 8) besitzt eine schematisch eingezeichnete erste Schnecke 14.i, wobei lediglich die Schnecke 14.1 in Figur 1 eingezeichnet ist.

Die Schnecke 14.1 erstreckt sich entlang einer Schnecken-Längsachse L_{14.1}. Es ist zu erkennen, dass im vorliegenden Fall alle Schnecken-Längsachsen L_{14.i} durch einen Extrusionskopf 18 verlaufen. Der Extrusionskopf 18 umfasst ein Kopfgehäuse 20 und ein Spritzwerkzeug 22. Das Spritzwerkzeug 22 umfasst eine Profilplatte 24, an der eine Austrittsöffnung 26 ausgebildet ist. Die Austrittsöffnung 26 gibt dem zu fertigenden Lauf- oder Seitenstreifen ihre Endkontur.

Figur 1 zeigt, dass das Spritzwerkzeug 22 eine erste Verteilerplatte 28, eine zweite Verteilerplatte 30 und eine dritte Verteilerplatte 32 aufweist. Im vorliegenden Fall ist die Profilplatte 24 an einer dritten Verteilerplatte 32 befestigt, beispielsweise eingeschoben. Schematisch ist eine Fixiervorrichtung 34 eingezeichnet, die im vorliegenden Fall mechanisch das Spritzwerkzeug 22 am Kopfgehäuse 20 festspannt, beispielsweise mittels eines Knebels.

Im Betrieb fördert jeder Extruder 12.i Extrusionsmaterial in Form von Kautschuk, das durch eine Zuführvorrichtung 36.i, beispielsweise einen Zuführtrichter, dem Extruder 12.i zugeführt wird, entlang eines Materialpfads auf das Spritzwerkzeug 22 zu.

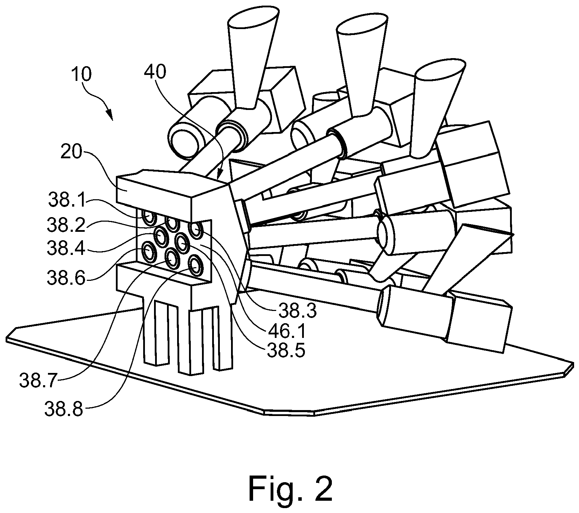

Figur 2 zeigt die Reifenstreifen-Extrusionsvorrichtung 10, bei der das Spritzwerkzeug 22 (vgl. Figur 1) entfernt ist. Das Kopfgehäuse 20 weist mehrere Zuführöffnungen 38.i auf, durch die im Betrieb Extrusionsmaterial von den Extrudern 12.i strömt. Es ist zu erkennen, dass das Kopfgehäuse 20 eine Rückwand 40 aufweist, die den Extrudern 12.i zugewandt ist und eine konvexe Form hat. Es ist zudem zu erkennen, dass die Zuführöffnungen 38.i in einem zweidimensionalen Muster angeordnet sind, im vorliegenden Fall nämlich in Form von drei parallel zueinander verlaufenden Reihen.

Auf der Seite, die der ersten Verteilerplatte 28 zugewandt ist, ist eine erste Trennfläche 46.1 ausgebildet. An dieser Trennfläche 46.1 liegt im Betrieb die erste Verteilerplatte 28 an.

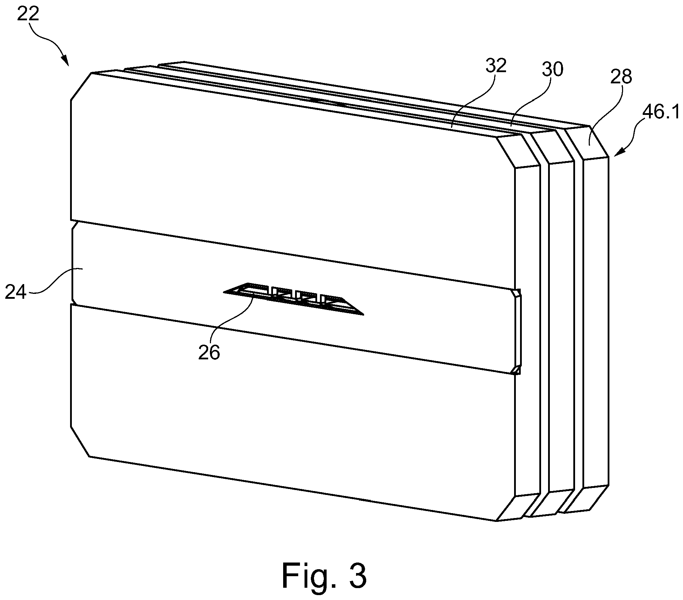

Figur 3 zeigt das Spritzwerkzeug 22. Die Austrittsöffnung 26 hat eine Querschnittsfläche von im vorliegenden Fall 2000 Quadratmillimeter.

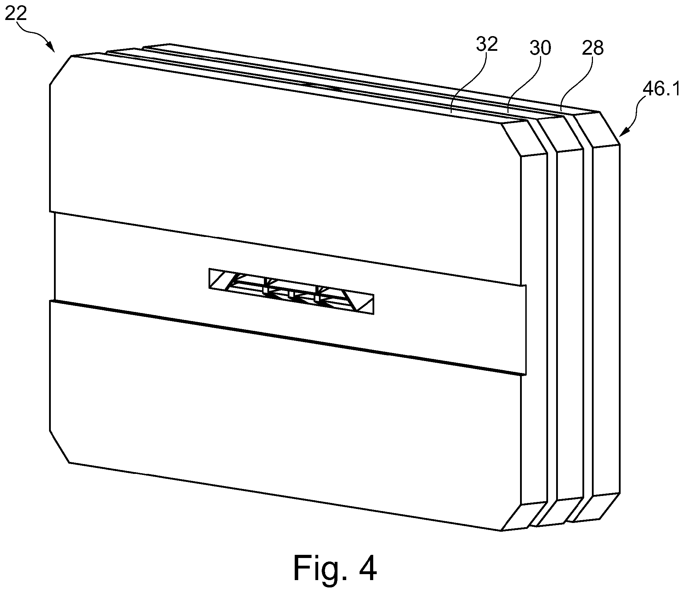

Figur 4 zeigt das Spritzwerkzeug 22 ohne Profilplatte. Es ist zu erkennen, dass in Materialflussrichtung vor der Austrittsöffnung 26 (vgl. Figur 3) mehrere Kanäle angeordnet sind, durch die jeweils Extrusionsmaterial zuströmt, um sich an der Austrittsöffnung 26 zu einem Reifenstreifen zu verbinden.

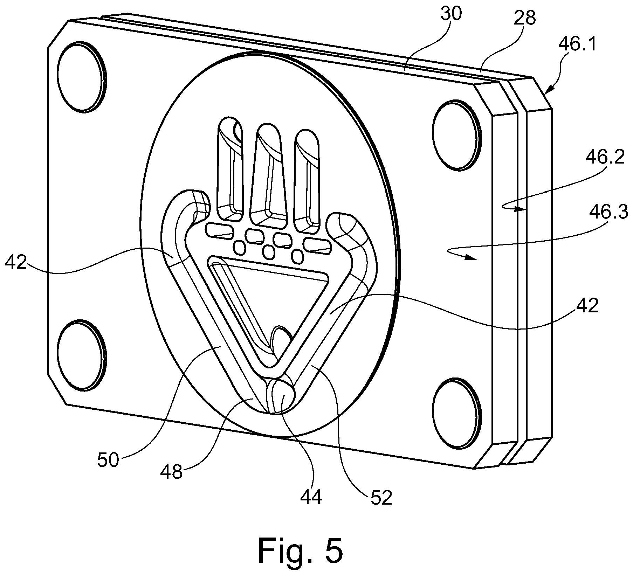

Figur 5 zeigt die zweite Verteilerplatte 30 im Detail. Es ist zu erkennen, dass die zweite Verteilerplatte 30 einen Leitkanal 42 besitzt, der mit einer Bohrung 44 verbunden ist. Zwischen der ersten Verteilerplatte 28 und der zweiten Verteilerplatte 30 ist eine zweite Trennfläche 46.2 ausgebildet. Zwischen der zweiten Verteilerplatte 30 und der dritten Verteilerplatte 32 ist eine dritte Trennfläche 46.3 ausgebildet. Der Leitkanal 42 erstreckt sich entlang der dritten Trennfläche 46.3, die im vorliegenden Fall durch eine Breitseite mit der zweiten Verteilerplatte 30 verbunden ist.

Der Leitkanal 42 besitzt eine Verzweigung 48, die im vorliegenden Fall im Bereich der Bohrung 44 angeordnet ist. In der Verzweigung spaltet sich der Leitkanal 42 in einen ersten Kanal-Zweig 50 und einen zweiten Kanal-Zweig 52.

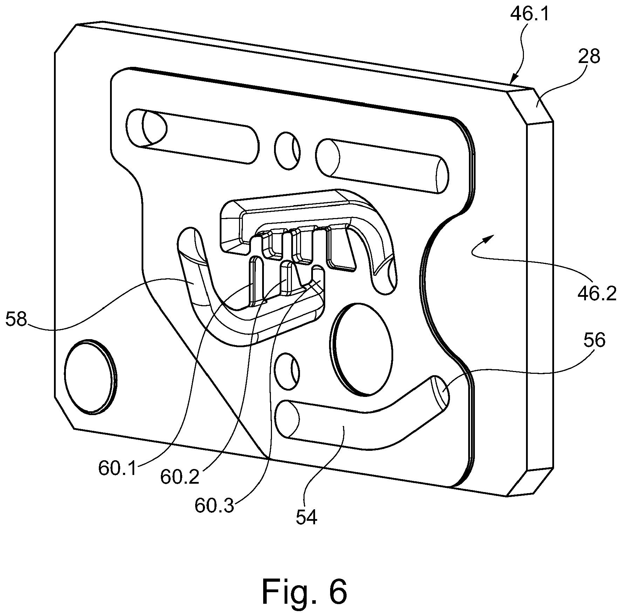

Figur 6 zeigt die erste Verteilerplatte 28. Es ist zu erkennen, dass die Bohrung 44 (vgl. Figur 5) mit einem zweiten Leitkanal 54 verbunden ist, der über eine zweite Bohrung 56 mit Extrusionsmaterial versorgt wird.

Es ist zu erkennen, dass die erste Verteilerplatte 28 einen dritten Leitkanal 58 besitzt, der sich in drei Kanal-Zweige 60.1, 60.2, 60.3 verzweigt.

### Bezugszeichenliste

- 10: Reifenstreifen-Extrusionsvorrichtung
- 12: Extruder
- 14: erste Schnecke
- 18: Extrusionskopf
- 20: Kopfgehäuse
- 22: Spritzwerkzeug
- 24: Profilplatte
- 26: Austrittsöffnung
- 28: erste Verteilerplatte
- 30: zweite Verteilerplatte
- 32: dritte Verteilerplatte
- 34: Fixiervorrichtung
- 36: Zuführvorrichtung
- 38: Zuführöffnung
- 40: Rückwand
- 42: Leitkanal
- 44: Bohrung
- 46: Trennfläche
- 48: Verzweigung
- 50: Kanal-Zweig
- 52: zweiter Kanal-Zweig
- 54: Leitkanal
- 56: zweite Bohrung
- 58: dritter Leitkanal
- 60: Kanal-Zweige
- L₁₄: Schnecken-Längsachse

## Patentansprüche

1. Reifenstreifen-Extrusionsvorrichtung zum Herstellen von Lauf- und/oder Seitenstreifen für Reifen, mit
(a) einem ersten Extruder (12.1), der zumindest eine erste Schnecke (14.1) mit einer ersten Schnecken-Längsachse (L_{14,1}) aufweist,
(b) einem zweiten Extruder (12.2), der zumindest eine zweite Schnecke (14.2) mit einer zweiten Schnecken-Längsachse (L_{14,2}) aufweist,
(c) einem dritten Extruder (12.3), der zumindest eine dritte Schnecke (14.3) mit einer dritten Schnecken-Längsachse (L_{14,3}) aufweist,
(d) zumindest einem vierten Extruder (12.4), der zumindest eine vierte Schnecke (14.4) mit einer vierten Schnecken-Längsachse (L_{14,4}) aufweist, und
(e) einem Extrusionskopf (18) mit
(i) einem Kopfgehäuse (20),
das zumindest vier Zuführöffnungen (38.i) aufweist, die mit jeweils einem zugeordneten Extruder (12.i) zum Zuführen von Extrusionsmaterial verbunden sind, und
(ii) einem Spritzwerkzeug (22) zum Formen eines Extrusionsstrangs aus den Extrusionsmaterialien, das
- mit dem Kopfgehäuse (20) verbunden ist,
- eine Austrittsöffnung (26) besitzt und
- so angeordnet ist, dass durch die Zuführöffnungen (38.i) zugeführtes Extrusionsmaterial entlang eines jeweiligen Materialpfads zur Austrittsöffnung (26) leitbar ist,
(f) wobei zumindest die Mehrheit der Extruder (12.i) und das Kopfgehäuse (20) so ausgebildet sind, dass die Schnecken (14.i) der jeweiligen Extruder (12.i) entnehmbar sind, während das Kopfgehäuse relativ zu den Extrudern ruht,
(g) wobei das Spritzwerkzeug (22) eine Profilplatte (24) aufweist, an der die Austrittsöffnung (26) ausgebildet ist,
**wobei**
(h) das Spritzwerkzeug (22)
- eine erste Verteilerplatte (28) und
- zumindest eine zweite Verteilerplatte (30, 32) aufweist, die bezüglich eines Materialpfads vor der Profilplatte (24) angeordnet ist,
(i) die erste Verteilerplatte (28) entlang einer ersten Trennfläche (46.1) am Kopfgehäuse (20) anliegt und entlang einer zweiten Trennfläche (46.2) an der zweiten Verteilerplatte (30) anliegt, und
(j) die Verteilerplatten so ausgebildet sind, dass zumindest eine Mehrheit aller Materialpfade durch alle Trennflächen (46.i) verläuft,
(k) zumindest eine Verteilerplatte (28, 30, 32) zumindest einen Leitkanal (42) aufweist, der sich zumindest abschnittsweise entlang einer Trennfläche (46.i) erstreckt,
(l) zumindest eine Verteilerplatte (28, 30, 32) eine Bohrung (44) aufweist,
(m) der Leitkanal (42) mit der Bohrung (44) verbunden ist, und
(n) zumindest ein Leitkanal (42) an einem der Bohrung (44) abgewandten Ende eine Verzweigung in einen ersten Kanal-Zweig (50) und zumindest einen zweiten Kanal-Zweig (52) aufweist, sodass aus der Bohrung (44) im Leitkanal (42) fließendes Extrusionsmaterial in Strömungsrichtung hinter der Verzweigung sowohl in den ersten Kanal-Zweig als auch in den zweiten Kanal-Zweig fließt.

2. Reifenstreifen-Extrusionsvorrichtung nach Anspruch 1, **dadurch gekennzeichnet, dass** zumindest die Mehrheit der Extruder (12.i) und das Kopfgehäuse (20) so ausgebildet sind, dass die Schnecken (14.i) der jeweiligen Extruder (12.i)
(a) mittels einer Bewegung der Schnecke durch das Kopfgehäuse oder
(b) mittels einer Bewegung der Schnecke vom Kopfgehäuse weg entnehmbar sind, während das Kopfgehäuse relativ zu den Extrudern ruht.

3. Reifenstreifen-Extrusionsvorrichtung nach einem der vorstehenden Ansprüche,
**gekennzeichnet durch**
zumindest sieben Extruder (12.i),
wobei das Kopfgehäuse (20) zumindest sieben Zuführöffnungen (38.i) besitzt und wobei jeder Extruder mit genau einer Zuführöffnung verbunden ist.

4. Reifenstreifen-Extrusionsvorrichtung nach einem der vorstehenden Ansprüche,
**dadurch gekennzeichnet, dass** alle Materialpfade durch alle Trennflächen (46.i) verlaufen.

5. Reifenstreifen-Extrusionsvorrichtung nach einem der vorstehenden Ansprüche,
**dadurch gekennzeichnet, dass** die Verteilerplatten durch eine Translationsbewegung in das Kopfgehäuse (20) einsetzbar ausgebildet sind.

6. Reifenstreifen-Extrusionsvorrichtung nach einem der vorstehenden Ansprüche,
**dadurch gekennzeichnet, dass** zumindest eine Mehrheit der Extruder (12.i) einen Schneckendurchmesser von höchstens 150 Millimeter, insbesondere höchstens 120 Millimeter, hat.

7. Reifenstreifen-Extrusionsvorrichtung nach einem der vorstehenden Ansprüche,
**dadurch gekennzeichnet, dass**
die Extruder so angeordnet sind, dass die Projektionen von zumindest zwei Schnecken-Längsachsen (L₁₄) auf die horizontale Ebene einen Winkel von zumindest 45° einschließen.

8. Reifenstreifen-Extrusionsvorrichtung nach einem der vorstehenden Ansprüche,
**dadurch gekennzeichnet, dass**
die Zuführöffnungen in einem zweidimensionalen Muster angeordnet sind.

9. Reifenstreifen-Extrusionsvorrichtung nach einem der vorstehenden Ansprüche,
**dadurch gekennzeichnet, dass**
eine Abweichung zwischen dem maximalen Schneckendurchmesser aller Extruder (12.i) und dem Mittelwert aller Schneckendurchmesser aller Extruder (12.i) höchstens 30 Millimeter beträgt.

10. Verfahren zum Herstellen eines Lauf- oder Seitenstreifens eines Reifens, **dadurch gekennzeichnet, dass** eine Extrusionsvorrichtung (10) nach einem der Ansprüche 1 bis 9 verwendet wird und ein Ausstoß an Laufstreifen zumindest 2500 Kilogramm pro Stunde beträgt und/oder ein Ausstoß an Seitenstreifen zumindest 1000 Kilogramm pro Stunde beträgt.

## Claims

1. A tire strip extrusion apparatus for manufacturing treads and/or side walls for tires, with
(a) a first extruder (12.1) having at least one first screw (14.1) with a first screw longitudinal axis (L_{14.1}),
(b) a second extruder (12.2) having at least one second screw (14.2) with a second screw longitudinal axis (L_{14.2}),
(c) a third extruder (12.3) having at least one third screw (14.3) with a third screw longitudinal axis (L_{14.3}),
(d) at least one fourth extruder (12.4) having at least one fourth screw (14.4) with a fourth screw longitudinal axis (L_{14.4}), and
(e) an extrusion head (18) with
(i) a head housing (20),
which has at least four supply openings (38.i) which are each connected with an associated extruder (12.i) for supplying extrusion material, and
(ii) an injection tool (22) for forming an extrusion strand from the extrusion materials, which
- is connected to the head housing (20),
- has an outlet opening (26), and
- is arranged in such a way that extrusion material that is supplied through the supply openings (38.i) can be passed along a respective material path to the outlet opening (26),
(f) wherein at least the majority of the extruders (12.i) and the head housing (20) are formed in such a way that the screws (14.i) of the respective extruders (12.i) are removable, while the head housing is at rest relative to the extruders,
(g) wherein the injection tool (22) has a profile plate (24) at which the outlet opening (26) is formed,
**wherein**
(h) the injection tool (22) has
- a first distribution plate (28), and
- at least one second distribution plate (30, 32) which is arranged in front of the profile plate (24) with respect to a material path (24),
(i) the first distribution plate (28) abuts the head housing (20) along a first separating surface (46.1) and abuts the second distribution plate (30) along a second separating surface (46.2), and
(j) the distribution plates are formed in such a way that at least a majority of all the material paths runs through all the separation surfaces (46.i),
(k) at least one distribution plate (28, 30, 32) has at least one guide channel (42) which extends at least in sections along a separating surface (46.i),
(l) at least one distribution plate (28, 30, 32) has a bore (44),
(m) the guide channel (42) is connected to the bore (44), and
(n) at least one guide channel (42) has a branch into a first channel branch (50) at an end facing away from the bore (44) and at least one second channel branch (52), so that extrusion material flowing out of the bore (44) in the guide channel (42) flows both in the first channel branch and in the second channel branch behind the branch in the direction of flow.

2. The tire strip extrusion apparatus according to claim 1, **characterized in that** at least the majority of the extruders (12.i) and the head housing (20) are formed in such a way that the screws (14.i) of the respective extruders (12.i) are removable
(a) by moving the screw through the head housing, or
(b) by moving the screw away from the head housing, while the head housing is at rest relative to the extruders.

3. The tire strip extrusion apparatus according to any one of the preceding claims, **characterized by**
at least seven extruders (12.i),
wherein the head housing (20) has at least seven supply openings (38.i) and each extruder is connected with exactly one supply opening.

4. The tire strip extrusion apparatus according to any one of the preceding claims, **characterized in that** all material paths run through all the separation surfaces (46.i).

5. The tire strip extrusion apparatus according to any one of the preceding claims, **characterized in that** the distribution plates are formed to be insertable in the head housing (20) by a translational movement.

6. The tire strip extrusion apparatus according to any one of the preceding claims, **characterized in that** at least a majority of the extruders (12.i) have a screw diameter of not more than 150 millimeters, in particular not more than 120 millimeters.

7. The tire strip extrusion apparatus according to any one of the preceding claims, **characterized in that**
the extruders are arranged in such a way that the projections of at least two screw longitudinal axes (L₁₄) onto the horizontal plane form an angle of at least 45°.

8. The tire strip extrusion apparatus according to any one of the preceding claims, **characterized in that**
the supply openings are arranged in a two-dimensional pattern.

9. The tire strip extrusion apparatus according to any one of the preceding claims, **characterized in that**
a deviation between the maximum screw diameter of all extruders (12.i) and the average of all screw diameters of all extruders (12.i) is not more than 30 millimeters.

10. A method for manufacturing a tread or side wall for a tire, **characterized in that** an extrusion apparatus (10) according to any one of claims 1 to 9 is used and an output of treads is at least 2500 kilograms per hour and/or an output of side walls is at least 1000 kilograms per hour.

## Revendications

1. Dispositif d'extrusion de bandes de pneumatique destiné à la fabrication de bandes de roulement et/ou de bandes latérales de pneumatique, comportant
(a) une première extrudeuse (12.1) qui comporte au moins une première vis sans fin (14.1) présentant un premier axe longitudinal (L_{14,1}) de vis sans fin,
(b) une deuxième extrudeuse (12.2) qui comporte au moins une deuxième vis sans fin (14.2) présentant un deuxième axe longitudinal (L_{14,2}) de vis sans fin,
(c) une troisième extrudeuse (12.3) qui comporte au moins une troisième vis sans fin (14.3) présentant un troisième axe longitudinal (L_{14,3}) de vis sans fin,
(d) au moins une quatrième extrudeuse (12.4) qui comporte au moins une quatrième vis sans fin (14.4) présentant un quatrième axe longitudinal (L_{14,4}) de vis sans fin, et
(e) une tête d'extrusion (18) comportant
(i) un carter de tête (20),
présentant au moins quatre orifices d'alimentation (38.i) qui sont reliés chacun à une extrudeuse (12.i) correspondante pour l'amenée de matériau d'extrusion, et
(ii) un outil d'injection (22) destiné à la formation d'un jonc d'extrusion à partir des matériaux d'extrusion, qui
- est relié au carter de tête (20),
- possède un orifice de sortie (26) et
- est disposé de manière à ce que le matériau d'extrusion amené à travers les orifices d'alimentation (38.i) puisse être conduit le long d'un cheminement de matériau respectif vers l'orifice de sortie (26),
(f) dans lequel au moins la majorité des extrudeuses (12.i) et le carter de tête (20) sont configurés de façon à ce que les vis sans fin (14.i) des extrudeuses (12.i) respectives puissent être retirées, tandis que le carter de tête est immobile par rapport aux extrudeuses,
(g) l'outil d'injection (22) comportant une plaque profilée (24) sur laquelle est réalisé l'orifice de sortie (26),
**dans lequel**
(h) l'outil d'injection (22) comporte
- une première plaque de distribution (28) et
- au moins une deuxième plaque de distribution (30, 32) qui est disposée avant la plaque profilée (24) par rapport à un cheminement de matériau,
(i) la première plaque de distribution (28) est en contact avec le carter de tête (20) le long d'une première surface de séparation (46.1) et avec la deuxième plaque de distribution (30) le long d'une deuxième surface de séparation (46.2), et
(j) les plaques de distribution sont configurées de façon à ce qu'au moins une majorité de tous les cheminements de matériau passent par toutes les surfaces de séparation (46.i),
(k) au moins une plaque de distribution (28, 30, 32) comporte au moins un conduit (42) qui s'étend au moins par sections le long d'une surface de séparation (46.i),
(l) au moins une plaque de distribution (28, 30, 32) comporte un alésage (44),
(m) le conduit (42) est relié à l'alésage (44), et
(n) au moins un conduit (42) comporte à une extrémité opposée à l'alésage (44) une bifurcation en une première branche de conduit (50) et au moins une deuxième branche de conduit (52), de sorte que le matériau d'extrusion s'écoulant hors de l'alésage (44) dans le conduit (42) s'écoule dans le sens de l'écoulement après la bifurcation aussi bien dans la première branche de conduit que dans la deuxième branche de conduit.

2. Dispositif d'extrusion de bandes de pneumatique selon la revendication 1, **caractérisé en ce qu'au** moins la majorité des extrudeuses (12.i) et le carter (20) de tête sont configurés de façon à ce que les vis sans fin (14.i) des extrudeuses (12.i) respectives puissent être retirés
(a) au moyen d'un mouvement de la vis sans fin dans le carter de tête ou
(b) au moyen d'un mouvement de la vis sans fin hors du carter de tête,
tandis que le carter de tête est immobile par rapport aux extrudeuses.

3. Dispositif d'extrusion de bandes de pneumatique selon l'une quelconque des revendications précédentes, **caractérisé par**
au moins sept extrudeuses (12.i),
le carter de tête (20) possédant au moins sept orifices d'alimentation(38.i) et chaque extrudeuse étant reliée à exactement un orifice d'alimentation.

4. Dispositif d'extrusion de bandes de pneumatique selon l'une quelconque des revendications précédentes, **caractérisé en ce que** tous les cheminements de matériau passent par toutes les surfaces de séparation (46.i).

5. Dispositif d'extrusion de bandes de pneumatique selon l'une quelconque des revendications précédentes, **caractérisé en ce que** les plaques de distribution sont configurées pour pouvoir être insérées par un mouvement de translation dans le carter de tête (20) .

6. Dispositif d'extrusion de bandes de pneumatique selon l'une quelconque des revendications précédentes, **caractérisé en ce qu'**au moins une majorité des extrudeuses (12.i) ont un diamètre de vis sans fin d'au maximum 150 millimètres, en particulier au maximum 120 millimètres.

7. Dispositif d'extrusion de bandes de pneumatique selon l'une quelconque des revendications précédentes, **caractérisé en ce que** les extrudeuses sont disposées de façon à ce que les projections d'au moins deux axes longitudinaux (L₁₄) de vis sans fin forment sur le plan horizontal un angle d'au moins 45°.

8. Dispositif d'extrusion de bandes de pneumatique selon l'une quelconque des revendications précédentes, **caractérisé en ce que** les orifices d'alimentation sont disposés en un schéma bidimensionnel.

9. Dispositif d'extrusion de bandes de pneumatique selon l'une quelconque des revendications précédentes, **caractérisé en ce qu'**un écart entre le diamètre maximal de vis sans fin de toutes les extrudeuses (12.i) et la moyenne de tous les diamètres de vis sans fin de toutes les extrudeuses (12.i) est au maximum de 30 millimètres.

10. Procédé pour la fabrication d'une bande de roulement ou latérale d'un pneumatique, **caractérisé en ce qu'**on utilise un dispositif d'extrusion (10) selon l'une quelconque des revendications 1 à 9 et un rendement en bandes de roulement est d'au moins 2 500 kilogrammes par heure et/ou un rendement en bandes latérales est d'au moins 1 000 kilogrammes par heure.
